# EUROPEAN PATENT APPLICATION

(11) **EP 3 217 625 A1**
(43) Date of publication of application: **13.09.2017**
(21) Application number: 17160196.6
(22) Date of filing: 09.03.2017
(51) Int. Cl.: H04L 29/06, H04W 12/12, H04L 29/08

(54) **METHODS AND SYSTEMS FOR SECURE NETWORK SERVICE**

(30) Priority: 09.03.2016 US 201662305999 P
(71) Applicant: Japan Communications Inc., Tokyo 105-0001 (JP)
(72) Inventor: YODA, Nobuhisa, Tokyo 105-0001 (JP); SANDA, Frank, Tokyo 105-0001 (JP); FUKUDA, Naohisa, Tokyo 105-0001 (JP); NIHONGI, Kazutaka, Tokyo 105-0001 (JP); DEICKMAN, Greg, Tokyo 105-0001 (JP)
(74) Representative: D Young & Co LLP

(57) **Abstract**

Methods and systems for controlling secure network communication are provided. A request is received from a terminal device to establish a session with a remote application server for a secure network communication. At least one routing table is selected. The at least one routing table is selected is specific to a communication session requested to route data traffic to establish a secure data communication path. At least one proxy connection server that provides functionality of managing the session is selected. A first secure connection that is between the terminal device and the connection server is activated based on the selected routing table. Additionally, a second secure connection between the connection server and the remote application server is activated based on the selected routing table. Further, data traffic for the session is routed using the activated routing table through the activated proxy connection server.

## Description

### CROSS-REFERENCE TO RELATED SECTIONS

This application claims the benefit of U.S. Provisional Patent Application Serial No. 62/305,999 entitled "Methods and Systems for Secure Network Service," filed March 9, 2016, the disclosure of which is hereby incorporated by reference in its entirety.

### BACKGROUND OF THE INVENTION

The use of mobile communications devices has become increasingly common for conducting financial transactions. As more people rely on electronic communications to conduct financial transactions, secure communications relating to financial transactions have become an increasingly high priority for users.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### SUMMARY OF THE INVENTION

Methods and systems for secure data communications are provided. Financial transactions, as well as other electronic transactions that may involve sensitive information, may be conducted using connections that avoid the Internet. In this way, electronic transactions may avoid attacks from malware on the internet. However, systems that facilitate electronic transactions without using the Internet may still be vulnerable to malware on other mobile devices, on interim connection servers, or on remote servers.

In particular, methods and systems are provided to secure data communications from malware, or other undesirable software, that may be present on computing resources, such as other mobile devices, interim connections, and/or remote servers. The malware or other undesirable software that compromises the security is typically not directly associated with a secure data connection itself because it is from external interests. It is typically installed on one of the ends or interim network components prior to or during the communication for execution. Risk of having such malware or other undesirable software may be drastically reduced if computing resources can be isolated among respective secure data connections. There are various methods to isolate each secure data connection. At application level, different execution processes may be instantiated to process different data communications; the isolation at application process level, however, is ineffective because typically device drivers and ports may be shared among different data connections, making the system vulnerable for security breach if the malware or other undesirable software is installed at the device driver level. Embodiments of the invention may feature a combination of isolated addressing, isolated routing, as well as isolated network computing resources, which are dynamically allocated in a synchronized manner as secure data connection is required. The isolated addressing may be provided by use of static private IP addressing and virtual port mapping for secure addressing and ports. The isolated routing may be provided by virtual routing tables. The isolated resource allocations are implemented by virtual machines to create proxy connection servers. Such virtualized environment may be instantiated and managed at different levels of context granularity, such as, but not limited to, for each secure data communication session between an application on client and a server, for each application on clients, for each client, or for each server transmitting data with clients.

Embodiments of the invention may feature a system that allocates and assigns computing resources, such as CPU, memory and ports, in a dedicated manner to particular data transmission session, and to isolate individual data communication sessions from one another. Embodiments of the invention may enable the system to allocate and deallocate the computing resources dynamically and virtually for data communication sessions as becomes necessary, and optimizes management of isolated resources for data communications. According to embodiments of the invention, the system dynamically and remotely updates data in routing tables in network routers to correctly route data communication that uses ports that are dedicated for a secure data communication session. Remote update may be accomplished by distributing a routing table from a connection server when an isolated, secure data communication path is dynamically created and destroyed.

Example methods, systems, and devices for secure data communications are provided herein. According to an aspect of the invention, a computer-implemented method is provided for controlling a secure network connection. The method comprises receiving, by a connection server, a request from a terminal device to establish a session with a remote application server for a secure network communication. The method also comprises selecting, by the connection server, at least one routing table from a set of multiple routing tables, the at least one routing table specific to the session requested to route data traffic to establish a secure data communication. Additionally, the method comprises activating, by the connection server, at least one proxy connection server, the proxy connection server providing functionality of managing the session. In examples, the proxy connection server may manage the session in an isolated manner from other sessions. Further, the method comprises connecting, by the connection server, a first secure connection that is between the terminal device and the activated proxy connection server based on the selected routing table. The method also comprises connecting, by the connection server, a second secure connection between the activated proxy connection server and a remote application server based on the selected routing table. Additionally, the method comprises routing, by the connection server, data traffic for the session using the selected routing table through the activated proxy connection server.

In some embodiments, the proxy connection server is an instance of a proxy connection server that is exclusive to the secure network communication. In some embodiments, the aforementioned computer-implemented method may further comprise distributing, by the connection server, at least one routing table from a set of multiple routing tables, which is specific to the secure network communication, to at least one network router switch device on the network. In some embodiments, the aforementioned computer-implemented method may comprise remotely installing, by the connection server, the routing table on the network router switch device.

In some embodiments, a computer-implemented method is provided for an MVNE service platform, where both the Mobile Network Operator (MNO)-Mobile Virtual Network Enabler (MVNE) interconnect configurations and MVNE-Mobile Virtual Network Operator (MVNO) resource allocations are managed for the MVNE. In some embodiments, a queue is provided to manage MVNO resource change requests by the MVNOs for MVNE to review and decide on resource allocation changes. The MVNE service platform includes control channels to separately accommodate communications within MVNE, between MVNE and MNO, and MVNE and MVNOs. Components within the MVNE service platform features isolated computing and memory spaces for respective MVNOs to separately manage subscriber information, service policies, and data communications for the respective MVNO services.

### BRIEF DESCRIPTION OF THE DRAWINGS

Some novel features of the invention are set forth with particularity in the appended claims. A better understanding of the features and advantages of the invention will be obtained by reference to the following detailed description that sets forth illustrative embodiments, in which the principles of the invention are utilized, and the accompanying drawings of which:
FIG. 1 illustrates a system for secure data communications, in accordance with embodiments of the invention;
FIG. 2 illustrates a process of establishing a secure connection, in accordance with embodiments of the invention;
FIG. 3 illustrates a system for secure data communications using routing tables, in accordance with embodiments of the invention;
FIG. 4 illustrates a process of establishing a secure connection using routing tables, in accordance with embodiments of the invention;
FIG. 5 illustrates a flowchart of processing a request of terminating data communication sessions, in accordance with embodiments of the invention.
FIG. 6 illustrates an example data structure to manage Proxy Connection Servers, in accordance with embodiments of the invention.
FIG. 7 illustrates an example data structure to manage secure connections, in accordance with embodiments of the invention.
FIG. 8 illustrates an example data structure, in accordance with embodiments of the invention.
FIG. 9 illustrates another system for secure connection, in accordance with embodiments of the invention.
FIGs. 10 and 11 illustrate block diagrams of computer hardware platforms, in accordance with embodiments of the invention.
FIG. 12 illustrates an example system with dedicated control channels to manage allocating MVNE resources among MVNOs, in accordance with embodiments of the invention.
FIG. 13 illustrates an example system with the dedicated control channel for MVNO X, in accordance with embodiments of the invention.
FIG. 14 illustrates an example system with the dedicated control channel for MVNO Y, in accordance with embodiments of the invention.
FIG. 15 illustrates an example system with the dedicated control channel for communications between MNO and MVNE, in accordance with embodiments of the invention.
FIG. 16 illustrates an example system with the end-end data channel between Mobile Device and Application Servers / Internet through MNO, MVNE, and MVNO, in accordance with embodiments of the invention.
FIG. 17 illustrates an example process where a MVNO signs up a service with MVNE and starts a telecommunication service, in accordance with embodiments of the invention.
FIG. 18 illustrates an example graphical user interface of MVNO Service Management for MVNO, in accordance with embodiments of the invention.
FIG. 19 illustrates an example graphical user interface of MVNE Resource Management for MVNE, in accordance with embodiments of the invention.
FIG. 20 illustrates an example process of resource allocation based on requests made by MVNOs, in accordance with embodiments of the invention.
FIG. 21 illustrates an example data structure to manage allocation of mobile network core components to MVNOs by MVNE, in accordance with embodiments of the invention.
FIG. 22 illustrates an example schematic diagram showing resource allocation configurations for MNO-MVNE, MVNE, and MVNO, in accordance with embodiments of the invention.
FIG. 23 illustrates an example data structure to manage secure connection profiles, in accordance with embodiments of the invention.

### DETAILED DESCRIPTION OF THE INVENTION

The following detailed description of the invention refers to the accompanying drawings.

The present disclosure provides methods and systems for management of a secure network connection where network data communications are isolated with respect to not only transmission paths and addressing, but are also able to flexibly allocate computing and memory resources that are used to process and route data. In this way, the disclosure may be used to provide communication sessions that are isolated from one another during the secure communication. In examples, systems may overcome risks of security breach when there are malware and other software on other mobile devices, in any interim connection server, or in the remote server, especially when more than one connectivity sessions are sharing one or more components of a same computing environment. In particular, such networks having shared components between connecting resources may fall short of providing end-to-end security.

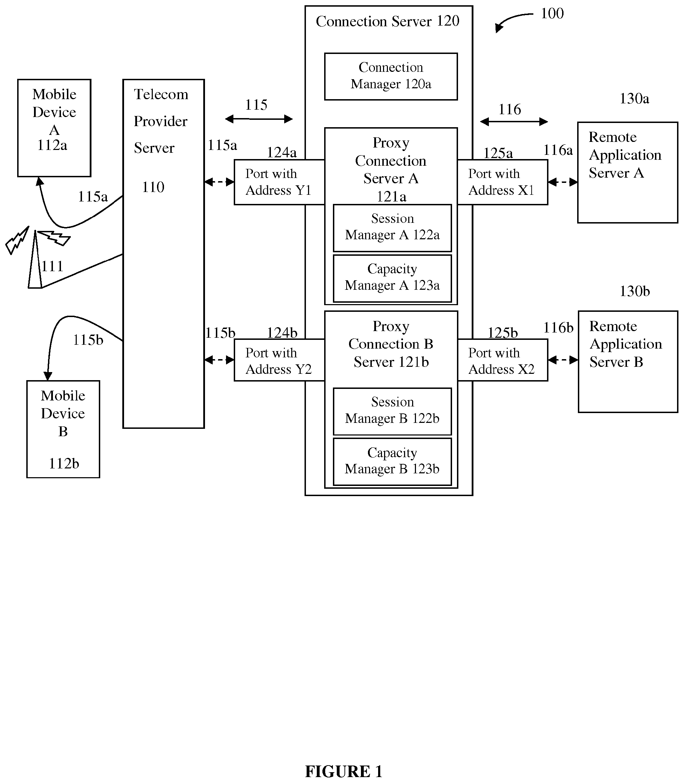

FIG. 1 illustrates a system for secure data communications, in accordance with embodiments of the invention. In particular, FIG. 1 provides system 100 that includes Mobile Device A 112a and Mobile Device B 112b. Mobile Device A 112a and Mobile Device B 112b may each connect via wireless network with a Base Station 111 to Telecom Provider Server 110. The wireless network may be a cellular wireless network such as a Wideband Code Division Multiple Access (W-CDMA) or a Long-Term Evolution (LTE) network. Telecom Provider Server 110 may connect with Connection Server 120 via a direct, private network connection (semantically as shown in 115) such as a private leased line. Connection Server 120 may comprise Connection Manager 120a and at least one Proxy Connection Server. For example, FIG. 1 shows Proxy Connection Server A 121a and Proxy Connection Server B 121b. In some examples, a Connection Server may include additional Proxy Connection Servers. In some examples, a Connection Server may include one, two three, four, five, ten, fifteen, twenty, or more than twenty Proxy Connection Servers. The maximum number of instantiations of Proxy Connection Servers may be dictated by hardware specifications such as processing power and memory capacity as well as server configurations such as distributed and federated server management designs. Each Proxy Connection Server may accommodate one or more of secure data connections with up to tens of thousands of data traffic sessions. In some examples, one Connection Server may accommodate as many as tens of thousands of Proxy Connection Servers in one Connection Server, where each Proxy Connection Server accommodate one secure data connection, ensuring computing environment that is isolated among secure data connections. Each Proxy Connection Server may be used for a data transmission connection between at least one mobile device and a remote application server. As seen in FIG. 1, Proxy Connection Server A 121a processes a connection for data communication between Mobile Device A 112a and Remote Application Server A 130a. Similarly, in FIG. 1, Proxy Connection Server B 121b processes data communication between Mobile Device B 112b and Remote Application Server B 130b.

Connection Manager 120a may manage lifecycle of data communication sessions by controlling Proxy Connection Servers within Connection Server 120. Each Proxy Connection Server may consist of at least one Session Manager and at least one Capacity Manager. Accordingly, as seen in FIG. 1, Proxy Connection Server A 121a has a Session Manager A 122a and a Capacity Manager A 123a. Similarly, Proxy Connection Server B 121b has a Session Manager B 122b and a Capacity Manager B 123b. Each Proxy Connection Server may feature at least two ports that are uniquely identifiable for use with the particular Proxy Connection Server: one port that is to connect with a Mobile Device via Telecom Provider Server 110, and a second port that is to connect with a Remote Application Server.

As seen in FIG. 1, Proxy Connection Server A 121a contains Session Manager A 122a and Capacity Manager A 123a, as well as Port with Address Y1 124a for connecting with Mobile Device A 112a via Telecom Provider Server 110 through a private line 115a and Port with Address X1 125a for connecting with Remote Application Server A 130a via a private network 116a. Similarly, as seen in FIG. 1, Proxy Connection Server B 121b contains Session Manager B 122b and Capacity Manager B 123a, as well as Port with Address Y2 124b for connecting with Mobile Device B 112b via Telecom Provider Server 110 through a private line 115b and Port with Address X2 125b for connecting with Remote Application Server B 130b via a private network 116b.

In examples, each communication session within Connection Server 120 may be processed using computing resources and data transmission paths that are isolated from those used for other communication sessions. The isolation of computing and memory resources may be used to ensure secure data communication. In examples, Connection Manager 120a may dynamically configure and allocate resources such that life-time of the isolated spaces is per communication session between a device and a remote application server, per communication sessions by one or more mobile devices, or per one or more of remote application servers.

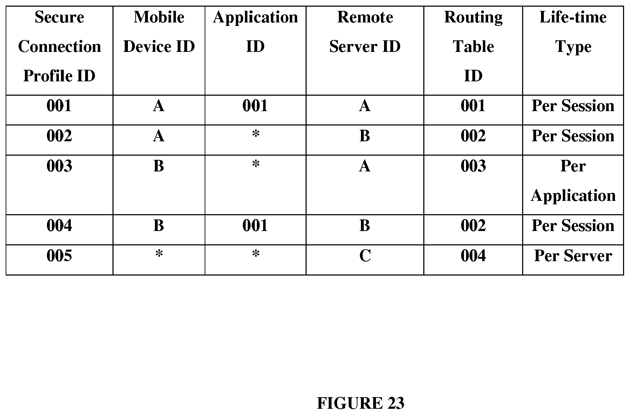

The life-time of the isolated computing space may be determined by a data structure to manage secure data connection rules and profiles. This data structure may contain profiles of different secure data connections based on clients and servers that communicate, and the data structure managed by Connection Manager 120a. In some examples, the data structure is accessible to Connection Manager 120a. In some examples, the data structure is within Connection Manager 120a. As shown in FIG. 23, such a data structure may contain information such as Secure Communication Connection Profile ID, Client or Mobile Device ID, Server ID, and a life-time type of secure data connection required by the connection. The type field may include values such as but not limited to: per communication session, per application, per client, per server. Upon receiving a connection request for a secure data connection, Connection Manager 120a within Connection Server 120 may search for a profile that matches with the communication requirement, and may undertake implementation of the isolated computing space according to the profile. Upon receiving a disconnect request or session time out on an active session, a Proxy Connection Server that is handling the particular session may notify Connection Manager 120a within Connection Server 120 about the request. Connection Manager 120a within Connection Server 120 may then de-allocate the resource allocation and de-configure the Proxy Connection Server as needed according to the profile for the session.

According to FIG. 23, Secure Connection Profile ID 001 is for a secure connection between an application with its ID 001 on Mobile Device ID A and Remote Server ID A. The secure connection uses Router Table ID 001, and the life-time of the secure connection is per data communication session where resource allocations and routing information are deconfigured after the secure data connection ends its life-time. Similarly Secure Connection Profile ID 002 is for a secure data connection between Mobile Device A regardless of applications that transmit data and Remote Server ID B, using Routing Table ID 002, and the life-time is per session.

In some examples, the life-time of the isolated computing space may be determined based on explicit information contained within a secure connection request received by Connection Manager 120a within Connection Server 120 from clients or remote servers. In such a case, the connection request includes a field with a value that specifies one of the aforementioned life-time types. In some examples, Connection manager 120a may receive a request for a secure data connection, which end points and conditions does not have any entry to specify Secure Connection Profile ID. In such a case, Connection manager may create a new entry in the secure connection profile table based on the request by inserting requested parameters such as information on endpoints in the new entry.

In some embodiments of the invention, characteristics of private network connection may include, but not limited to, components used for connections that are addressable privately only. Under the private network connection, all the data transmission paths may be identifiable. These characteristics may be contrary to use of the Internet, where components are addressable in public, and data transmission paths are not identifiable.

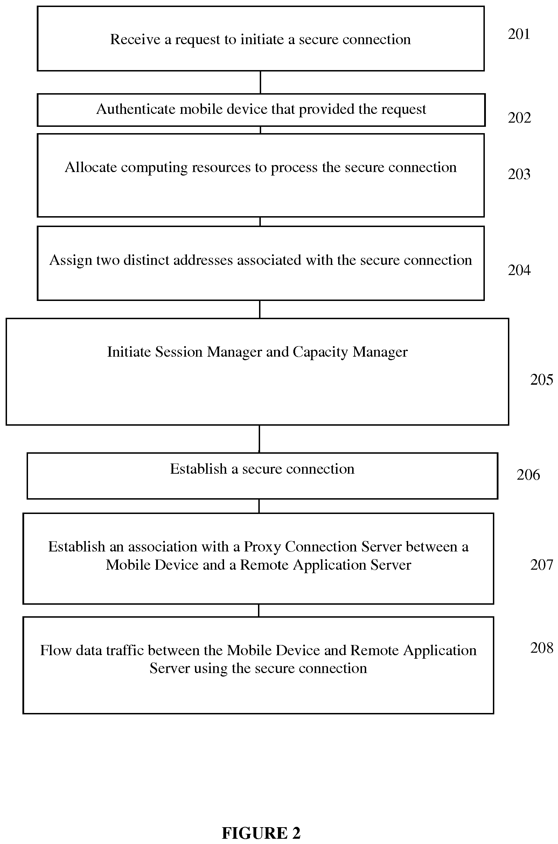

FIG. 2 illustrates a process of establishing a secure connection, in accordance with embodiments of the invention using the system depicted in FIG 1. At block 201, a request to initiate a secure connection is received. In examples, Connection Manger 120a within Connection Server 120 may receive a request from Mobile Device A 112a to initiate a secure connection with Remote Application Server A 130a. At block 202, the mobile device that provided the request is authenticated. In examples, Connection Manager 120a may authenticate Mobile Device A 112a. At block 203, computing resources to process the secure connection are allocated. In examples, Connection Manager 120a may determine a size of memory and/or computing resources required to establish and maintain data communication based on information such as but not limited to a capacity of mobile device, type of data media typically transmitted, as well as remaining resources available on Connection Server 120. In examples, Connection Manager 120a may allocate memory and computing resources, as well as communication bandwidth capacity and parameters related to quality of services to create an instance of a Proxy Connection Server to process secure data communication between Mobile Device A 112a and Remote Application Server A 130a.

At block 204, two distinct addresses associated with the secure connection are assigned. In examples, Connection Manager 120a assigns two distinct addresses to communication ports (124a and 125a) for the Proxy Connection Server A 121a by selecting from a pool of addresses available in the Connection Server 120: one for a connection with Mobile Device A 112a and the other for a connection with Remote Application Server A 130a, as specified by the mobile device. At block 205, a session manager and capacity manager are initiated. In examples, Connection Manager 120a starts Session Manager A 122a and Capacity Manager A 123a. Capacity Manager A 123a starts monitoring data traffic capacity such as bandwidth and intended latency for the data connection. Proxy Connection Server A 121a creates a connection with Remote Application Server A 130a through Port with Address X1 125a. At block 206, a secure connection is established. In examples, Connection Manager 120a then notifies about readiness to establish the connection with the Mobile Device A 112a. In examples, Connection Manager 120a completes establishing a secure connection between Mobile Device A 112a and Remote Application Server A 130a.

At block 207, an association is established with a Proxy Connection Server between a Mobile Device and a Remote Application Server. In examples, Connection Manager 120a creates an association with the Proxy Connection Server A 121a between the Mobile Device A 112a and the Remote Application Server A 130a, and issues a secure connection identifier for the connection. Additionally, at block 208, data traffic flows between the Mobile Device and the Remote Application Server. In examples, Connection Manager 120a may identify from the life-time of secure connections as defined by connection profile rules that an existing secure connection setup is to be used for the secure connection being requested. In examples, data traffic flows between the Mobile Device A 112a and the Remote Application Server A 130a via Telecom Provider Server 110, Proxy Connection Server A 121a, through Proxy Connection Server A 121a with Ports 124a and 125a.

In one embodiment, a request by a mobile device to establish a secure connection with a remote application server via Connection Server 120 may trigger to initiate a Proxy Connection Server to control a session of the secure connection. By starting a Proxy Connection Server for a specific session, an isolated computing resource may become available to the secure communication session. A Proxy Connection Server may consist of a set of computing resources, represented by components including, but not limited to, allocated processing power such as time and capacity of central processing unit, allocated and isolated memory space exclusively for the Proxy Connection Server, device drivers, ports and other input and output control mechanisms to access network and other hardware resources under isolated and exclusive access rights through time-division, hardware assignments, and other means to enable exclusive use. By coupling a secure connection session with a Proxy Connection Server, the system may manage computing resources that are exclusively used for the network connection. In this way, the system may maintain end-to-end secure connection encompassing both transmission data paths and computing resources used within the paths.

In one embodiment, ports assigned to Proxy Connection Servers may be independent ports or sub-ports of a port on Connection Manager 120a, where Connection Manager 120a may route data traffic at a port to sub-ports based on sub-port number or origin as appropriate. Having such a hierarchical management of ports improves manageability of multiple ports across multiple Proxy Connection Servers and mapping with physical ports.

In one embodiment, the systematic management of isolated computing, memory, and input/output interface resources may be implemented based on virtual machine technology, where each set of a virtual machine includes resources that are necessary to execute managing an isolated data transmission through Connection Server 120. Connection Server 120 may dynamically instantiate a virtual machine to execute as a Proxy Connection Server, and manage a life-time of the Proxy Connection Server as per communication session, per availability of a Remote Application Server that is connected by multiple Mobile Devices, or permanent, based on data communication requirements as configured in Connection Server 120.

In one embodiment, Connection Manager 120a may send and remotely install the selected routing tables to targeted network routers and switches that may be used to transmit data between the mobile communication device and the Remote Application Server, in order to securely transmit data between the device and the server via the Proxy Connection Server. Having a secure data connection may require its data transmission path for communication link to be identifiable. In embodiments, distributing, installing, updating, and deleting routing tables by Connection Manager 120a ensures that a lifecycle of data transmission paths is centrally managed by Connection Manager 120a. Connection Manager 120a may synchronize the lifecycle of the identifiable communication link with the lifecycle of secure data transmission. The targeted routers and switches may receive the routing tables from a Connection Manager, and may change routing and switching data traffic accordingly by updating routing rules within the routers and switches. The targeted routers and switches may delete the routing tables upon terminating a secure communication session. In examples, a secure data communication is requested by point A to Connection Manager 120a, for transmitting data from point A to point C via point B. Upon receiving the request, Connection Manager 120a may allocate a proxy connection server with two dedicated ports, one connecting with point A and the other connecting with point C. In embodiments, the proxy connection server features computing resources that are dedicated to the secure data connection. Once the proxy connection server is allocated, Connection Manager 120a may create a routing table data within Connection Server 120 with routing data between the Connection Server 120 and point C, and also point C and point B as requested by the secure data connection request. Connection Manager 120a may transmit the routing table data to point C. Upon receiving the routing table, point C may install the routing table, and the secure data connection between the Connection Server 120 and Point B via C may now be routed. As a result an end-end secure and identifiable routing between point A and point B via point C may be established. In embodiments, the routing is managed by Connection Manager 120a. Connection Manager 120a may require point B to be authenticated by Connection Server 120 before sending the router table. Connection Manager 120a may manage a data structure for managing secure data connections, which may contain information about different points and routers on the network. Upon the end of secure data connection, each network router may uninstall the routing table that contains routing information about the secure data connection, and de-configure the secure data connection.

Connection Manager 120a may keep track of active secure data connections and status of its routing table data by having a data structure for managing secure data connections. The data structure may contain, but may not be limited to, Secure Connection ID, addresses of two ends of the secure connection, Secure Connection Profile ID, time stamps that record a start and/or an end of the secure connection, and status that may indicate whether the secure connection is active or not.

In one embodiment, Connection Manager 120a may create an association between a selection of routing tables and the Proxy Connection Server. In this example, communication traffic for the requested secure session may be routed based on the selected routing table through the Proxy Connection Server.

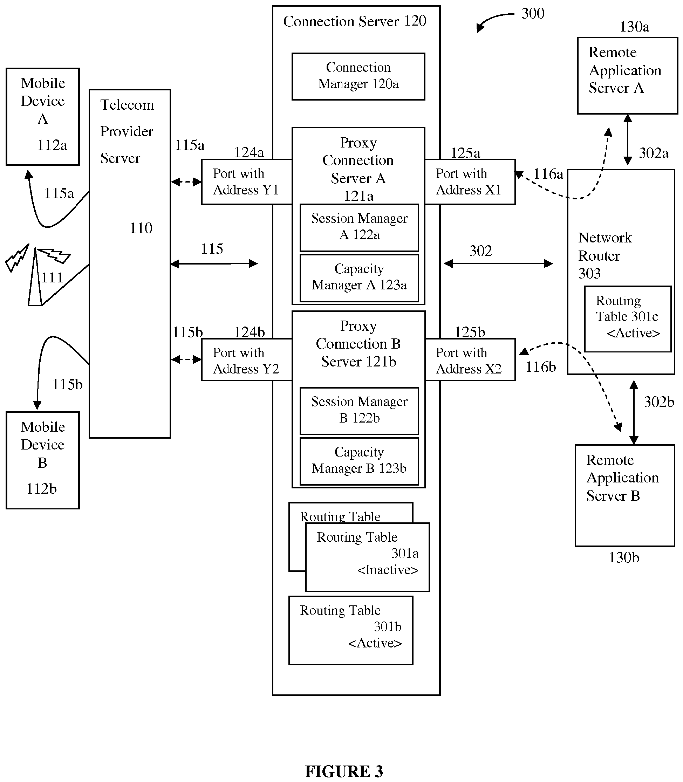

FIG. 3 illustrates a system for secure data communications using routing tables, in accordance with embodiments of the invention. As seen in FIG. 1, FIG. 3 provides system 300 that includes Mobile Device A 112a and Mobile Device B 112b. Mobile Device A 112a and Mobile Device B 112b may each connect via wireless network with a Base Station 111 to Telecom Provider Server 110. Telecom Provider Server 110 may connect with Connection Server 120, and Connection Server 120 may comprise Connection Manager 120a and at least one Proxy Connection Server. For example, FIG. 3 shows Proxy Connection Server A 121a and Proxy Connection Server B 121b. Each Proxy Connection Server may be used for a data transmission connection between at least one mobile device and a remote application server. As seen in FIG. 3, Proxy Connection Server A 121a processes a connection for data communication between Mobile Device A 112a and Remote Application Server A 130a. Similarly, in FIG. 3, Proxy Connection Server B 121b processes data communication between Mobile Device B 112b and Remote Application Server B 130b.

Connection Manager 120a may manage lifecycle of data communication sessions by controlling Proxy Connection Servers within Connection Server 120, such as Proxy Connection Server 121a and Proxy Connection Server 121b. Each Proxy Connection Server may consist of at least one Session Manager and at least one Capacity Manager. Accordingly, as seen in FIG. 3, Proxy Connection Server A 121a has a Session Manager A 122a and a Capacity Manager A 123 a. Similarly, Proxy Connection Server B 121b has a Session Manager B 122b and a Capacity Manager B 123b. Each Proxy Connection Server may feature at least two ports that are uniquely identifiable for use with the particular Proxy Connection Server: one port that is to connect with a Mobile Device via Telecom Provider Server 110 using a connection 115, and a second port that is to connect with a Remote Application Server using a connection 302. In particular, connection 302 connects a proxy connection server with network router 303. Network router 303 is connected to Remote Application Server A 130a using connection 302a and Remote Application Server B 130b using connection 302b, respectively.

As seen in FIG. 3, Proxy Connection Server A 121a contains Session Manager A 122a and Capacity Manager A 123a, as well as Port with Address Y1 124a for connecting with Mobile Device A 112a via Telecom Provider Server 110 through a private line 115a and Port with Address X1 125a for connecting with Remote Application Server A 130a via a private network 116a. Similarly, as seen in FIG. 3, Proxy Connection Server B 121b contains Session Manager B 122b and Capacity Manager B 123a, as well as Port with Address Y2 124b for connecting with Mobile Device B 112b via Telecom Provider Server 110 through a private line 115b and Port with Address X2 125b for connecting with Remote Application Server B 130b via a private network 116b.

In particular, FIG. 3 illustrates an example of a system with Connection Server 120 coordinating with Network Router 303 that maintains one or more Routing Tables to securely route data communication in the system 100. Routing Table 301a in Connection Server 120 has a status "Inactive", which indicates that the table is not actively used for routing data. Routing Table 301b has a status "Active," indicating that Connection Server 120 actively use the Routing Table 301b to configure secure data routing. For example, the active Routing Table 301b may specify that data communications between Mobile Device A 112a and Remote Application Server A 130a are to go through Port with Address Y1 124a and Proxy Connection Server A 121a, through Port with Address X1 125a. The table may also specify that data communications between Mobile Device B 112b and Remote Application Server B 130b are to use Port with Address Y2 124b, Proxy Connection Server B 121b, Port with Address X2 125b. These two communication sessions are managed in isolated manner within Connection Server 120, and data transmissions do not cross and mix each other. In addition, Network Router 303 contains Routing Table 301c, which is Active. In the example as illustrated in Figure 3, Routing Table 301c defines two data routing paths, where data transmission path between Port with Address X1 125a and Remote Application Server A 130a are independent from data transmission path between Port with Address X2 125b and Remote Application Server B 130b through Network Router 303. In one embodiment, Connection Server 120 may instruct Connection Manager 120a to select and activate a routing table based on a secure connection profile, as shown in FIG 23, which may be specified by a combination of two ends of the secure data connection and life-time requirements. Using the routing information from the profile, Connection Manager 120 may also set up virtual routing and forwarding (VRF) and virtual local area network (VLAN) to establish and maintain secure data connection to isolate data traffic on the network.

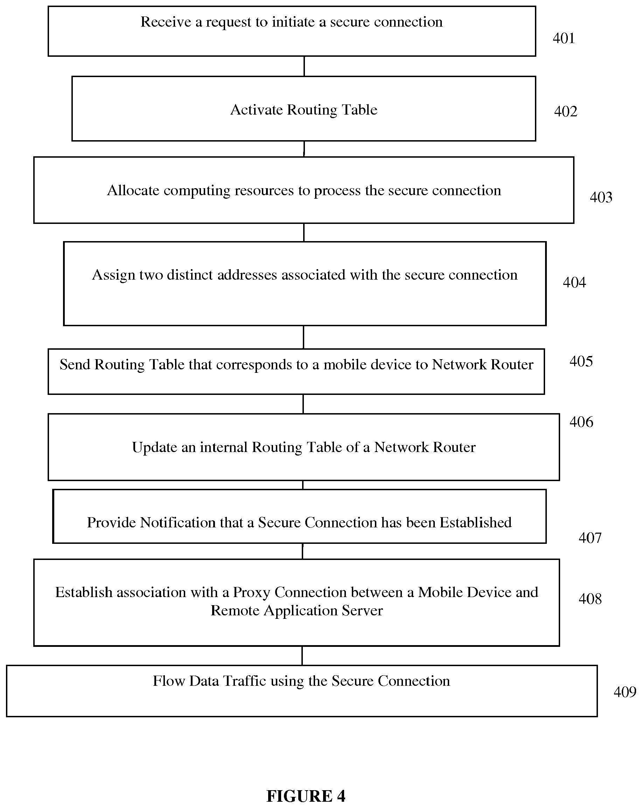

According to one embodiment, routing tables that are specific to a particular secure data transmission session may be distributed on the network by Connection Server 120 as a secure communication session is established. FIG. 4 illustrates a process of establishing a secure connection using routing tables, in accordance with embodiments of the invention. At block 401, a request to initiate a secure connection is received. In examples, Connection Server 120 receives a request from Mobile Device A 112a to start a secure connection with a Remote Application Server A 130a. At block 402, a routing table is activated. In examples, Connection Server 120 instructs Connection Manager 120a to activate Routing Table 301b for virtual routing and forwarding (VRF) and virtual local area network (VLAN). At block 403, computing resources to process the secure connection may be allocated. In examples, Connection Manager 120a may allocate memory, computing resources, communication bandwidth capacity, and may create a Proxy Connection Server A 121a to process the secure connection with Mobile Device A 112a.

At block 404, two distinct addresses associated with the secure connection are assigned. In examples, Connection Manager 120a assigns two distinct addresses (Y1 124a and X1 125a) for the Proxy Connection Server A 121a: one for a connection with Mobile Device A 112a via Telecom Provider Server 110 and the other for a connection with the Remote Application Server 130a. At block 405, a routing table that corresponds to a mobile device is sent to a network router. In examples, Connection Manager 120a may send Routing Table 301b that corresponds to Mobile Device A to network router 303. At block 406, an internal routing table of a network router is updated. In examples, Network router 303 updates its internal routing table as Routing Table 301c to establish virtual local area network or virtual routing and forwarding feature for the connection. At block 407, a notification that a secure connection has been established is provided. In examples, Connection Manager 120a notifies Mobile Device A 112a that the secure connection with the Mobile Device A has been established. At block 408, an association with a Proxy Connection Server between a Mobile Device and Remote Application Server is established. In examples, Connection Manager 120a creates an association between the Proxy Connection Server, the Mobile Device A 112a, and the Remote Application Server A 130a, routing table 301c, and issues a secure connection identifier for the secure connection. At block 409, data traffic flows using the secure connection. In examples, data traffic flows between Mobile Device A 112a and Remote Application Server A 130a via the Proxy Connection Manager A 121a and through Network Router 303.

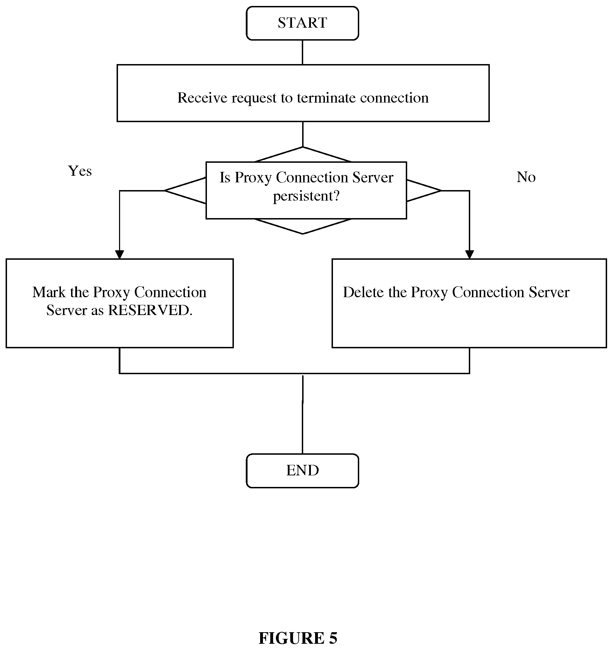

FIG. 5 illustrates a flowchart of processing a request of terminating data communication sessions, in accordance with embodiments of the invention. Initially, a request to terminate the connection may be received. In examples, Connection Manager 120 may receive a request to terminate connection from the Mobile Device A 112a. In response to receiving the request, a query may be made as to whether the Proxy Connection Server A is persistent. In examples, a query may be made as to whether the Proxy Connection Server A 121a is persistent. Connection Manager 120 may look up a Proxy Connection Manager management table such as the table and may determine whether the Proxy Connection Server A 121a has a Life-time Type of Per Session. If yes, then the Proxy Connection Serve may be marked as "RESERVED." In examples, Connection Manager 120a may mark the Proxy Connection Server A 121a as RESERVED. If no, the Proxy Connection Server may be deleted. In examples, Connection Manager 120a may delete the Proxy Connection Manager A 121a by releasing computing and memory resources as well as the addresses that are assigned to the Proxy Connection Server A 121a. The Proxy Connection Manager management table may also include information such as Allowed Mobile Device that specifies particular mobile devices to use the Proxy Connection Manager, an indicator on whether the Proxy Connection manager is shared among multiple Mobile Devices, address for the address port that is interfacing Mobile Device through Telecom Provide Server 110, address for the address port that is interfacing Remote Application Server via Network Router 303, as well as status of each configuration set being ACTIVE or not.

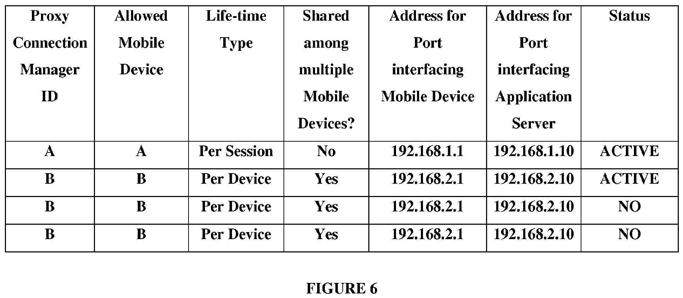

FIG. 6 illustrates an example data structure to manage Proxy Connection Servers, in accordance with embodiments of the invention. As seen in FIG. 6, the data structure provides a Proxy Connection Manager ID; an Allowed Mobile Device; a Life-time type; an indication of whether there is sharing among multiple Mobile Devices; an Address for Port interfacing Mobile Device; an Address for Port interfacing Application server; and a Status. FIG. 6 illustrates a Proxy Connection Manager ID of "A" or "B." Additionally, FIG. 6 indicates allowed mobile devices of "A" or "B." Further, a Life-time type as provided in FIG. 6 may be "Per Session" or "Per Device." Further, a "Yes" or "No" indication may be given regarding whether there is sharing among multiple Mobile Devices. As seen in FIG. 6, there are two addresses for ports interfacing a mobile device: "192.168.1.1" and "192.168.2.1," and there are two addresses for ports interfacing an application server: "192.168.2.10" and "192.168.2.10". Additionally, FIG. 6 provides two potential statuses for managing Proxy Connection Servers: "Active" and "No." The data structure to manage Proxy Connection Servers may be a part of a data structure to manage secure data connections.

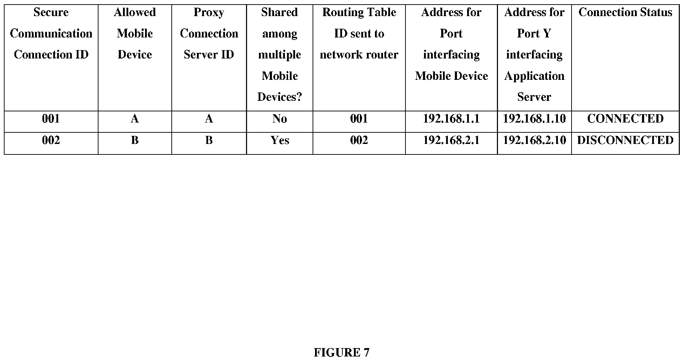

FIG. 7 illustrates an example data structure to manage secure data connections, in accordance with embodiments of the invention. As seen in FIG. 7, the data structure provides a Secure Communication Connection ID; an Allowed Mobile Device; a Proxy Connection Server ID; an indication of whether there is sharing among multiple Mobile Devices; a Routing Table ID sent to a Network Router; an Address for Port interfacing Mobile Device; an Address for Port Y interfacing Application server; and a Connection Status. FIG. 7 illustrates a Proxy Connection Manager ID of "001" or "002." Additionally, FIG. 7 indicates allowed mobile devices of "A" or "B." Further, a Proxy Connection Server ID as provided in FIG. 7 may be "A" or "B." Further, a "Yes" or "No" indication may be given regarding whether there is sharing among multiple Mobile Devices. Additionally, a Routing Table ID that is sent to a network router may be provided in FIG. 7 as "001" or "002". As seen in FIG. 7, there are two addresses for ports interfacing a mobile device: "192.168.1.1" and "192.168.2.1," and there are two addresses for port Y interfacing an application server: "192.168.2.10" and "192.168.2.10". These addresses may be private IP addresses. In particular, these addresses may be private IP addresses so that data communication traffic may be not addressable or reachable from the Internet. By using static or dynamic private IP addresses, the system may provide a higher level of secure communication environment where computing resources, routing data, as well as addresses used for a data communication session may be isolated from other sessions. Additionally, FIG. 7 provides two potential connection statuses: "Connected" and "Disconnected."

According to one embodiment, using a data table such as shown in FIG. 7, Connection Manager 120a may maintain association among a Proxy Connection Server, communication ports at connection server, as well as a mobile device and a remote application server, with a secure connection. Such association allows the Connection Manager 120a to efficiently bring up a secure connection session, maintain data routing during the session, and delete respective components after use of the secure connection session.

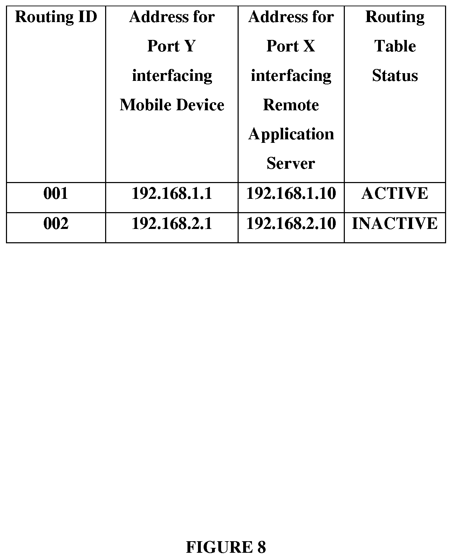

FIG. 8 illustrates an example data structure, in accordance with embodiments of the invention. In particular, FIG. 8 illustrates an example of a data routing table according to the invention. In one embodiment, the table may contain Routing ID, which identifies data routing specification. The Routing ID may be "001" or "002." Additionally, the table may contain Address for Port Y interfacing Mobile Device, which may be "192.168.1.1" or "192.168.2.1". Additionally, the table may contain an Address for Port X interfacing remote application server, which may be "192.168.1.10" or "192.168.2.10", as well as if the routing table is active or inactive. Connection Manager 120a may send routing table data to Network Router 402 and remotely install. Each of Routing Table 301a and 301b may be represented by a line in the data structure as depicted in FIG. 8. In embodiments, if routing information on a secure data connection is stored as a line in the data structure, Connection Manager 120a does not transmit the entire data structure in FIG. 8 but may transmit one line to network routers, which is particularly pertinent to a particular secure data connection being established.

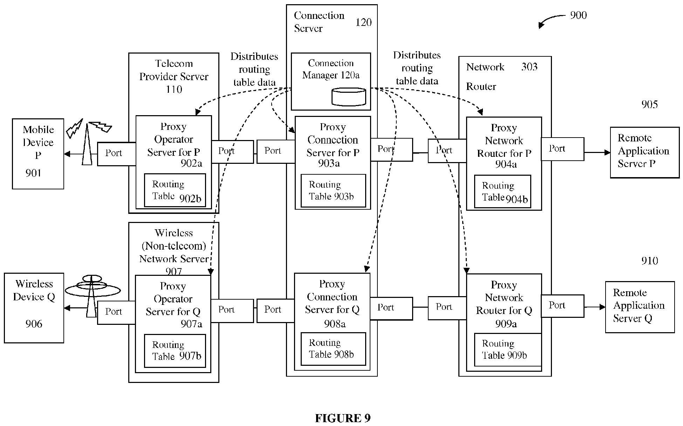

FIG. 9 illustrates another system 900 for secure connection, in accordance with embodiments of the invention. In particular, FIG. 9 illustrates a secure communication system in which Connection Server 120 provides end-end secure connectivity for multiple devices, which of which that is connected to different types of networks, including but not limited to cellular networks managed by telecommunication service operators, and wireless hotspot computer network managed by non-telecom wireless service providers. Connection Server 120 centrally manages secure sessions, and dynamically distributes and instantiate proxy servers, and process data communication in components between Mobile / Wireless Devices and respective Remote Application Servers when a secure connection session is requested by the devices, such that computing and memory resources are isolated among data communications. Connection Manager 120a, which centrally manages data routing tables distributes the tables as appropriate to remote components such as Telecom Service Server 110, Wireless (Non-telecom) Network Server 907, Connection Server 120, and Network Router 303, to create and maintain network environment that is securely isolated among data communication sessions. According to FIG. 9, each of data communication paths (one for communication between Mobile Device P 901 and Remote Application Server P 905, and the other for communication between Wireless Device Q 906 and Remote Application Server Q 910) are isolated not only on network ports but also on computing and memory resources within each of network system components such as Telecom Provider Server 110, Wireless (Non-telecom) Network Server 907, Connection Server 120, and Network Router 303. Connection Server 120 controls allocation of resources in respective components, and manages lifecycles of proxy entities such as Proxy Operator Server, Proxy Connection Server, and Proxy Network Router. Each proxy entity contains a routing table that is specific to each secure communication. In FIG. 9, Mobile Device P 901 is connected to a cellular telecommunication wireless network such as 3G/4G network, while Wireless Device Q 906 is connected to wireless compute network such as WiFi and Zigbee Machine-to-Machine (M2M) wireless network.

As shown in FIG. 9, Connection Manager 120 may command Connection Manager 120a to distribute routing table data, such as routing table data associated with Routing Table 902b to Proxy Operator Server for P 902a; routing table data associated with Routing Table 907b to Proxy Operator Server for Q 907a; routing table data associated with Routing Table 903b to Proxy Connection Server for P 903a; routing table data associated with Routing Table 908b to Proxy Connection Server for Q 908a; routing table data associated with Routing Table 904b to Proxy Network Router for P 904a; and routing table data associated with Routing Table 909b to Proxy Network Router for Q 909b. By managing life cycle of respective proxy servers, routing tables, as well as ports. Connection Manager 120 dynamically creates and maintains secure data communication sessions with isolated computing and network resources for communications between devices and servers. Connection Server 120 uniformly manages secure sessions for connectivity through telecom networks such as cellular wireless networks with licensed radio bands, as well as connectivity through non-telecom wireless computer networks such as WiFi (IEEE 802.11) and Zigbee (IEEE 802.15.4), which may be using unlicensed radio bands.

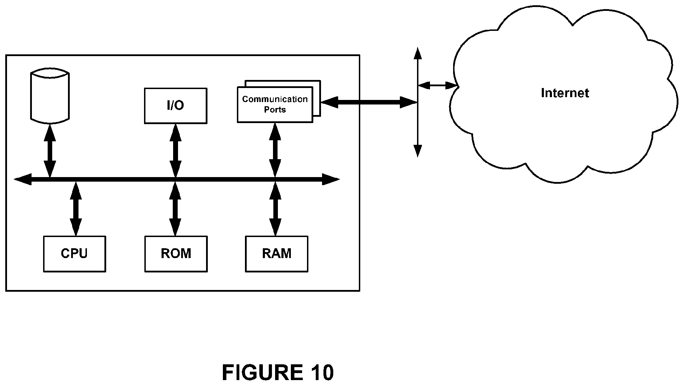

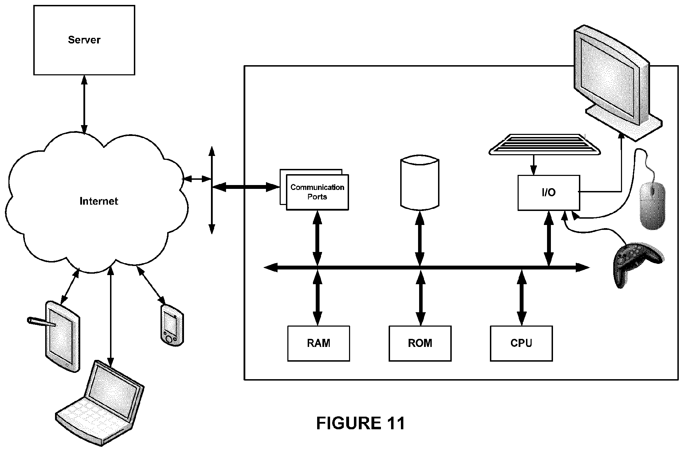

FIGs. 10 and 11 are functional block diagram illustrations of computer hardware platforms, in accordance with embodiments of the invention. In particular, FIG. 10 shows an example of a network or host computer platform, as may be used to implement a server or electronic devices, according to an embodiment. Additionally, FIG. 11 shows a computer with user interface elements, as may be used to implement a personal computer, electronic device, or other type of work station or terminal device according to an embodiment, although the computer of FIG. 11 may also act as a server if appropriately programmed. The systems and methods described herein may be implemented in or upon such computer hardware platforms in whole, in part, or in combination. The systems and methods described herein, however, are not limited to use in such systems and may be implemented or used in connection with other systems, hardware or architectures. The methods described herein may be implemented in computer software that may be stored in the computer systems and servers described herein.

A computer system or server, according to various embodiments, may include a data communication interface for packet data communication. The computer system or server may also include a central processing unit (CPU), in the form of one or more processors, for executing program instructions. The computer system or server may include an internal communication bus, program storage and data storage for various data files to be processed and/or communicated by the server, although the computer system or server may receive programming and data via network communications. The computer system or server may include various hardware elements, operating systems and programming languages. The server or computing functions may be implemented in various distributed fashions, such as on a number of similar or other platforms. The computer system may also include input and output (I/O) devices such as a mouse, game input device or controller, display, touch screen or other I/O device or devices in various combinations.

Examples of the invention may be used to create and manage sessions for secure data communication by allocating, for new sessions, computing resources which are isolated from those being used for other communication sessions. Moreover, examples of the invention may be used to dynamically create and manage data routing tables such that each table for a data communication session may be isolated from other data communication sessions. Use of these resources that are isolated from other sessions, combined with use of private IP addresses without exposure to the Internet, may enable the system to maintain secure communications in terms of both data processing at components within the network as well as addressing locations of components and data on the network.

In addition to the aforementioned embodiments, the invention is unexpectedly useful to a system platform that manages secure data communications services provided by a Mobile Virtual Network Enabler (MVNE) through Mobile Virtual Network Operators (MVNO) and their respective customers to use mobile networks, by using physical mobile networks as operated by Mobile Network Operators (MNO). A Mobile Network Operator owns and operates wireless radio base station and core network facilities to provide mobile network service to mobile devices. A Mobile Virtual Network Enabler (or alternatively called as Mobile Service Enabler) has physical network interconnection with Mobile Network Operators at ISO network layer 2 or 3. MVNE may be equipped with the following data processing components: Policy Control and Charging Rules Function (PCRF) that controls charging and policies on data communication, Packet Data Network Gateway (PDN-GW) that manages gateway functionality for data transmission at MVNE to and from MNO, Home Subscriber Server (HSS) that manages subscriber customer information, MVNE-Gateway (MVNE-GW) that manages gateway data connectivity with outside MVNE to the Internet and private networks.

The system segments and isolates management of system configurations that are specific to each MVNO, and also enabling MVNE to managing the aggregate system that is interconnected with Mobile Network Operators (MNO) cost effectively.

Typically an MVNO starts its telecommunication services to its customers with a small number of subscribers, and the MVNO expects it can start with a small number of subscribers and rapidly grow the number to scale up its business because the MVNO expects a little or no constraints from the underlying physical mobile networks. An MVNE, which provides mobile telecommunication services to the MVNO and other MVNO partners, are required to respond to the ever-changing needs in computing, memory, and network resources by the MVNOs. The MVNE however, is responsible to close the gap between the demands of MVNOs and the physical constraints that may be imposed by MNOs within which the MVNE interconnects. For the MVNE, the required response time to adjust resource allocation to MVNO may be instantaneous, while the time MNO requires to change configurations of the interconnection with the MVNE, the maximum network bandwidth between MNO and MVNE, for example, may require much longer time period such as four months or even more if MNO needs to replace its network equipment. Unlike conventional systems to manage policies, charging, subscribers, data transmission for mobile users, the requirement by MVNE may include both dynamic changes in capacities allocated for respective MVNOs while ensuring security and isolation of data among the MVNOs. The invention used in conjunction with methods for the MVNE to interact with the MVNOs and MNOs and prioritize and arbitrate to reallocate resources may be effective for an MVNE to make available stable network services to MVNOs and thus for their customers.

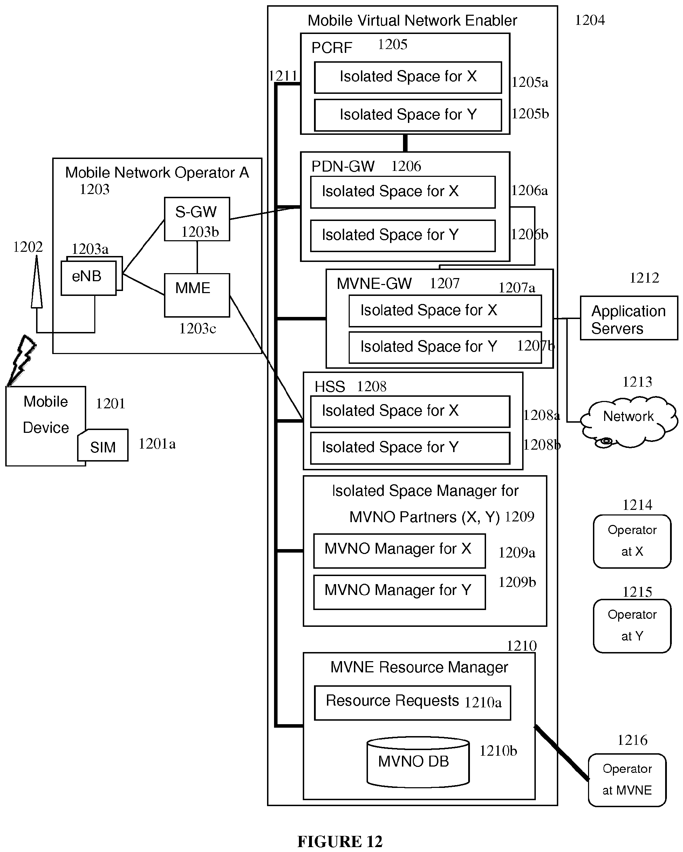

FIG. 12 illustrates an example system with dedicated control channels to manage allocating MVNE resources among MVNOs, in accordance with embodiments of the invention. In particular, FIG. 12 illustrates an example of a mobile virtual network service platform for an MVNE, which connects with an MNO, so as to accommodate one or more mobile network services operated by MVNOs to their respective customers. The system 1204 provides a connection by having a Proxy Connection Server dedicated to the secure connection on each component between the mobile device and the remote application server. Mobile Device 1201 with SIM (Subscriber Identification Module) 1201a has a network connection with either one of Application Servers 1212 directly, or with a network component via the Internet 1213, through MNO A 1203 and through MVNE 201. The Mobile Device 1201 connects with Mobile Network Operator A 1203 via the operator's radio base station 1202. The base station 1202 connects with Evolved Node B (eNB) 1203a in case of the LTE network. eNB 1203a connects with Service Gateway (S-GW) 1203b as well as Mobility Management Entity (MME) 1203c as the core network of the Mobile Network Operator A 1203. The Mobile Network Operator (MNO) A 1203 interconnects with Mobile Virtual Network Enabler (MVNE) 201. In the embodiment, MVNE 201 serves connectivity services to two Mobile Virtual Network Operators (MVNOs) X and Y, enabling these two MVNOs to provide their network services to their respective subscribing customers. Mobile Virtual Network Enabler 202 contains Policy Control and Charging Rules Function (PCRF) 1205. PCRF 1205 manages and control data traffic policies and manages charging rules for the data services. PCRF 1205 contains confined instances of PCRF for MVNO X (1205a) and PCRF for MVNO Y (1205b), each separately executes PCRF functionality for MVNO X and MVNO Y. Each of other components consists of internally isolated processing space for each MVNO. PDN-GW1206 contains Isolated Space X 1206a and Isolated Space for Y1206b.

FIG. 12 also highlights a network of control channel that is internal to MVNE 201, the control channels 1211 denoted by thick lines. An Operator at MVNE 1216 may interact with MVNE Resource Manager 1210 to view and manage resource allocation and consumption in the MVNE system. MVNE Resource Manager 1210 contains Resource Requests 1210a, which is a queue that stores and manages resource allocation change requests made by respective MVNOs (MVNO X and MVNO Y), so that MVNE may review and decide on the requests. The resource allocations and management information for MVNOs may be stored and managed in MVNO DB 1210b. MVNE Resource Manager 1210 may connect with PCRF 1205, PDN-GW 1206, MVNE-GW 1207, HSS 1208, and Isolated Space Manager for MVNO Partners (MVNO X and MVNO Y), in order to monitor all the resource allocation and uses by the MVNE.

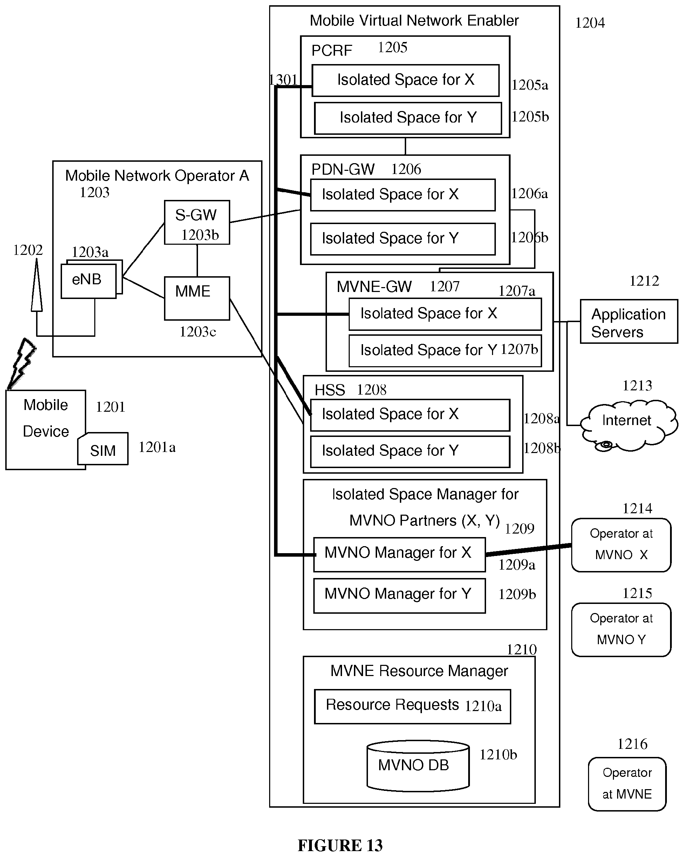

FIG. 13 illustrates an example system with the dedicated control channel for MVNO X, in accordance with embodiments of the invention. FIG. 13 comprises system components similar to those of FIG. 12. In particular, FIG. 13 illustrates an MVNE system platform with emphasis on control channel 1301 that the MVNO makes available for MVNO X. Control channel 1301 is denoted by thick lines in FIG. 13. Operator at MVNO X 1214 uses a terminal such as a web browser to access MVNO Manager for X 1209a, which is a subcomponent within Isolated Space Manager for MVNO Partners (X, Y) 1209. MVNO Manager for X 1209a executes and uses computing and memory resources that are isolated from MVNO Manager for other MVNO partners, thereby ensuring data security for the MVNO X. MVNO Manager for X 1209a connects with Isolated Space for X 1205a within PCRF 1205, Isolated Space for X 1206a within PDN-GW 1206, Isolated Space for X 1208a within HSS 1208. Each Isolated Space for X in respective components feature computing resources that are allocated specifically for MVNO X to execute respective functionalities that are essential for MVNO X to its provide telecommunication services. Through MVNO Manager for X 1209a, Operator at MVNO X 1214 may manage its customers and data to provide MVNO services by monitoring, requesting for changes in resources that are allocated by MVNE.

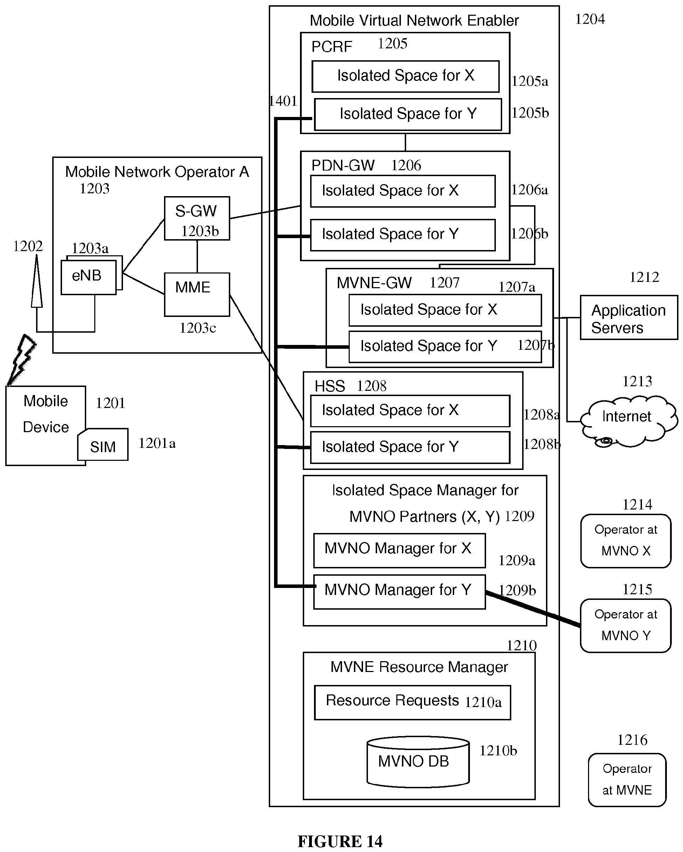

Similarly, FIG. 14 illustrates an example system with the dedicated control channel for MVNO Y, in accordance with embodiments of the invention. FIG. 14 comprises system components similar to those of FIG. 12. In particular, FIG. 14 illustrates an MVNE system platform with emphasis on control channel 1401 that the MVNO makes available for MVNO Y. Control channel 1401 is denoted by thick lines in FIG. 14. Operator at MVNO Y 1215 uses a terminal such as a web browser to access MVNO Manager for Y 1209b, which is a subcomponent within Isolated Space Manager for MVNO Partners (X, Y) 1209. MVNO Manager for Y 1209b executes and uses computing and memory resources that are isolated from MVNO Manager for other MVNO partners such as MVNO Manager for X 1209a, thereby ensuring data security for the MVNO Y. MVNO Manager for Y 1209b connects with Isolated Space for Y 1205b within PCRF 1205, Isolated Space for Y 1206b within PDN-GW 1206, Isolated Space for Y 1208b within HSS 1208. Each Isolated Space for Y in respective components feature computing resources that are allocated specifically for MVNO Y to execute respective functionalities that are essential for MVNO Y to its provide telecommunication services. Through MVNO Manager for Y 1209b, Operator at MVNO Y 1215 may manage its customers and data to provide MVNO services by monitoring, requesting for changes in resources that are allocated by MVNE.

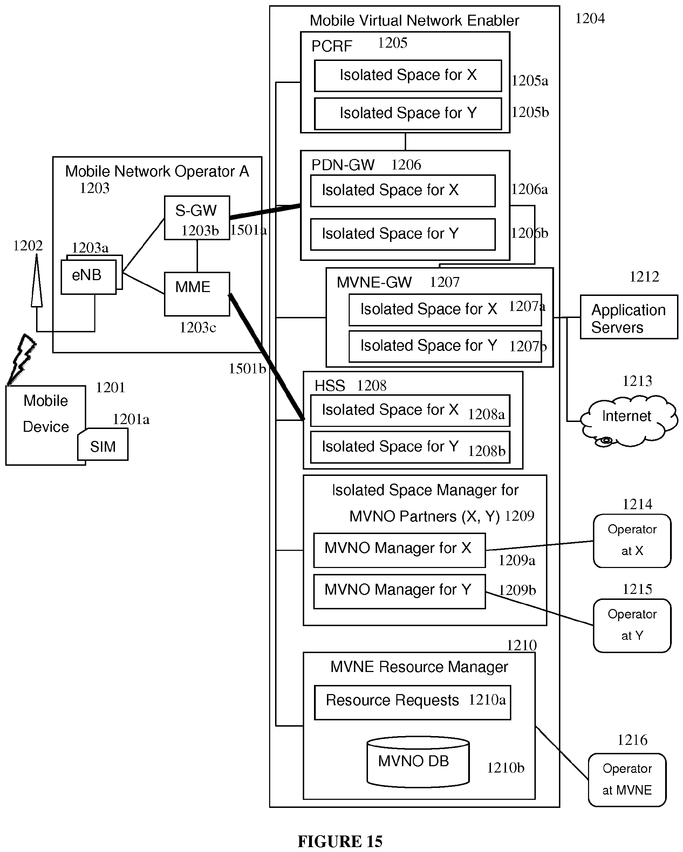

FIG. 15 illustrates an example system with the dedicated control channel for communications between MNO and MVNE, in accordance with embodiments of the invention.

FIG. 15 comprises system components similar to those of FIG. 12. In particular, FIG. 15 illustrates an MVNE system platform with emphasis on control data communication between MNO and MVNE, according to the invention. Control channel 1501a connects S-GW 1203b at MNO A 1203 with PDN-GW 1206 at MVNE, using the standard data protocol such as S5 and S8 mobile network protocols according to a 3^{rd} Generation Partnership Project (3GPP). Data link 1501b between MME 1203c at MNO A 1203 and HSS 1208 of MVNE uses a data protocol such as S6a of 3GPP to authenticate data connection requests between a mobile terminal such as Mobile Device 1201 to the network. Control channels 1501a and 1501b are denoted by thick lines in FIG. 15. These data communication links are specific to communications between MNO and MVNE, and are isolated from communications between MVNE and MVNO X/Y. These communications are monitored and controlled by MVNE Resource Manager 1210.

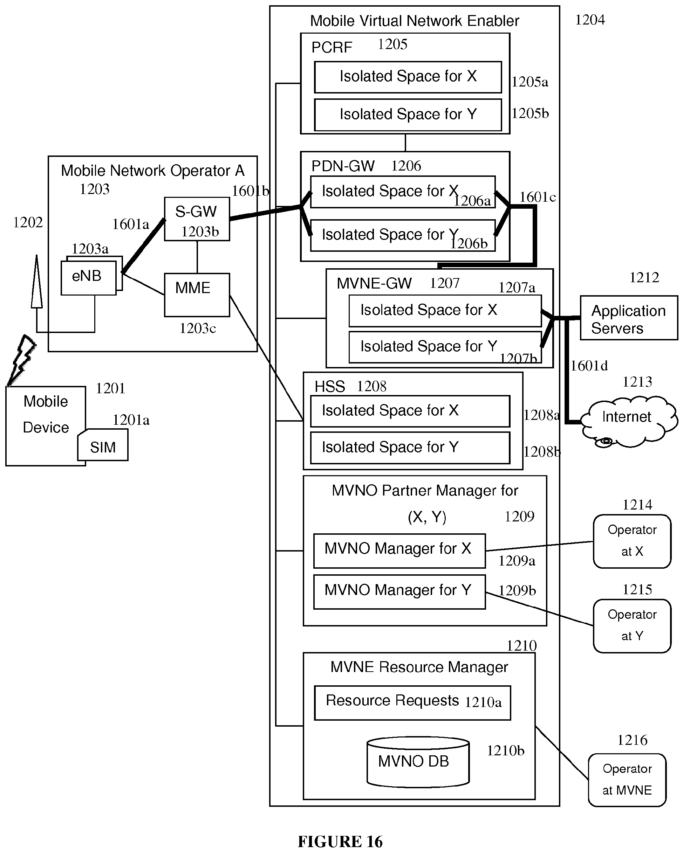

FIG. 16 illustrates an example system with the end-end data channel between Mobile Device and Application Servers / Internet through MNO, MVNE, and MVNO, in accordance with embodiments of the invention. FIG. 16 comprises system components similar to those of FIG. 12. In particular, FIG. 16 illustrates an MVNE system platform with emphasis data transmission path (data channel), according to the invention. Mobile Device 1201 communicates with Application Servers 1212 and the Internet 1213 by first connecting to the MNO A 1203 via the radio base station 1202 wirelessly to eNB 1203a. The data then passes through S-GW 1203b of MNO A 1203 via network segment 1601a and to PDN-GW 1206 of MVNE through network path 1601b. More specifically, if SIM 1201a of the Mobile Device 1201 indicates that it is for service under MVNO X, then the data is routed from S-GW 1203b to Isolated Space for Y 1206b within PDN-GW 1206. Within the Isolated Space for X 1206a, data may be monitored, throttled based on Isolated Space for X 1206a within PDN-GW 1206 communicating with the Isolated Space for X 1205a within PCRF 1205. Traffic controls for MVNO X is isolated from those for MVNO Y. Data then is passed from the Isolated Space for Y 1206a of PDN-GW 1206 to the Isolated Space for X 1207a with MVNE-GW 1207, which is a gateway server to external systems, via data path 1601c. Finally, data is sent to either Application Servers 1212 or the Internet via a path 1601d. Control channels 1601a, 1601b, 1601c, and 1601c are denoted by thick lines in FIG. 16. In embodiments, the MVNE system platforms as illustrated in FIGs. 13 through 16 are on one system that accommodates respective control channels and data channels as provided in this disclosure.

In examples, respective isolated spaces for X 1206a and Y 1206a within PDN-GW 1206, as well as respective isolated spaces for X 1207a and 1207b within MVNE-GW 1207, may create, activate, and maintain proxy processing components or virtualized processing components (not shown in Figure 16) within corresponding isolated spaces to process data traffic for respective secure data sessions. Such proxy processing components may have computing spaces that are isolated from other proxy processing components used for the corresponding MVNO, thereby isolating individual data communication sessions from one another to provide secure data communication. Such management of proxy processing components may be based on the technology of having proxy servers for secure data communication sessions, as aforementioned using FIG 9.

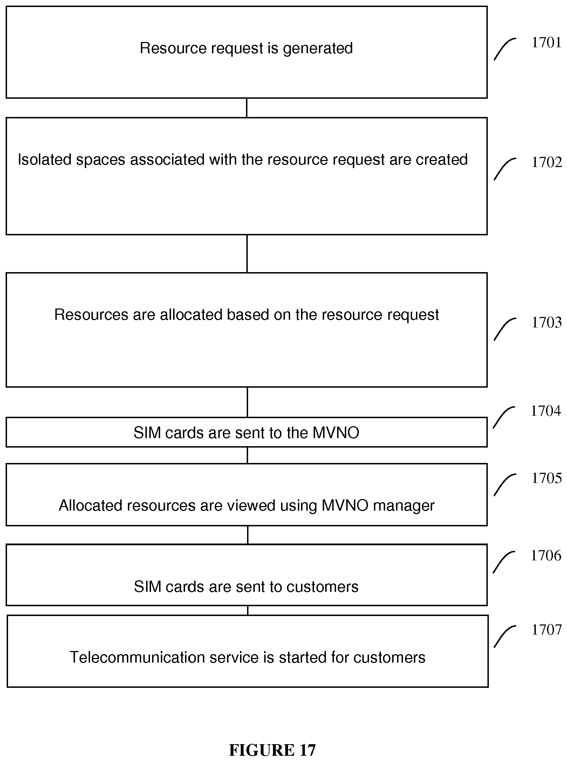

FIG. 17 illustrates an example process where a MVNO signs up a service with MVNE and starts a telecommunication service, in accordance with embodiments of the invention. In examples, FIG. 17 illustrates a method where the MVNE system platform enables an MVNO to register and start a new telecommunication service, according to the invention. At block 1701, a resource request is generated. In examples, a new MVNO registers itself as a new MVNO partner by an Operator of MVNO accessing the MVNO Partner Manager 1209, and places requests for computing, memory, and network resources, as well as a number of SIM cards needed to MVNE to start a new MVNO telecommunication service through graphical user interface such as web pages from a web browser. At block 1702, Isolated spaces associated with the resource request are created. In examples, the MVNE Resource Manager 1210 receives the Resource Requests 1210a that are placed by the MVNO, and allocates computing and memory resources for PCRF 1205, PDN-GW 1206, MVNE-GW 1207, HSS 1208, MVNO Partner for the new MVNO by sending instructions to the respective components through the MVNE control channel 1211. The instructed components create respective isolated spaces for the MVNO to process data. At block 1703, resources are allocated based on the resource request. MVNE Resource Manager 1210 allocates a range of Mobile Station International Subscriber Directory Number (MSISDN) and International Mobile Subscriber Identity (IMSI) for the MVNO, and updates the MVNE Database 1210b. At block 1704, SIM cards are sent to the MVNO. In examples, the MVNE issues SIM cards to the MVNO. At block 1705, allocated resources are viewed using an MVNO manager. At block 1706, SIM cards are sent customers. In examples, the MVNE Resource Manager may generate invoices to MVNO for billing the MVNE service to the MVNO. At block 1707, a new telecommunication service is started for customers. In examples, the new MVNO may start a new telecommunication service for its customers as the MVNE system platform allows Mobile Device 1201 with SIM 1201a for the MVNO to transmit data to Application Servers 1212 or to the Internet as specified by the Mobile Device 1201.

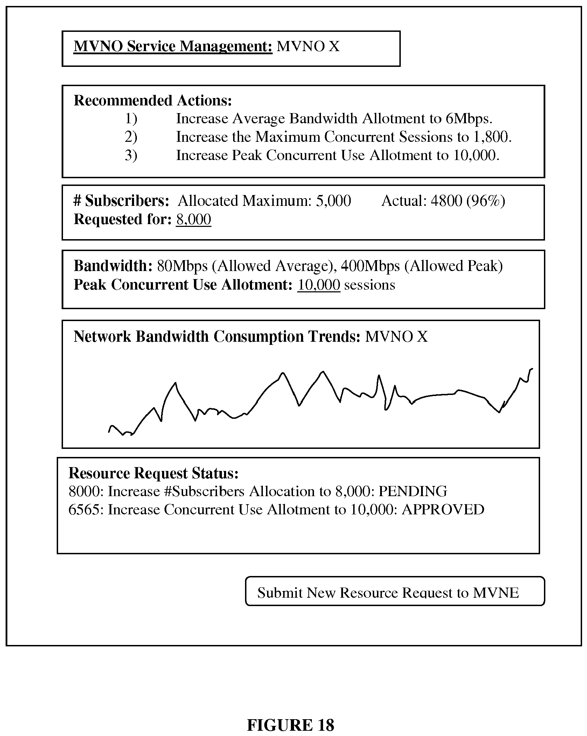

FIG. 18 illustrates an example graphical user interface of MVNO Service Management for MVNO, in accordance with embodiments of the invention. In particular, FIG. 18 illustrates an example of graphical user interface for the MVNO Service Management page for MVNO X. Operator of MVNO X may access the page, and monitor, analyze, and place resource allocation requests to MVNE. The page may consists of multiple sections, which may include a section on Recommended Actions, which lists actions as recommended by the MVNE system platform for MVNO X to provide MVNO telecommunication services that satisfy the customer demands. A section on # Subscribers indicates a number of subscribers as allocated by the system, actual number of subscribers in use, and also a number of subscribers that is being requested by the MVNO X to MVNE. A section on Bandwidth may indicate a value of the maximum network bandwidth that is allocated by the MVNE to MVNO X, actual bandwidth consumption by the MVNO X, as well as the Peak concurrent use allotment such as 10,000 sessions. The page may also display Network Bandwidth Consumption Trends for MVNO X, which indicates how much network bandwidth has been consumed by customers of MVNO X as time elapses. The page may also list Resource Request Status, which is a list of resource requests placed by MVNO X to MVNE. Each request has its status, whether the request is still pending review and approval by the MVNE, and if a request has been approved by MVNE. The page also enables MVNO X to create new resource requests to MVNE by having a button that takes the operator to create and submit a new resource request to MVNE (not shown in Figure 18).

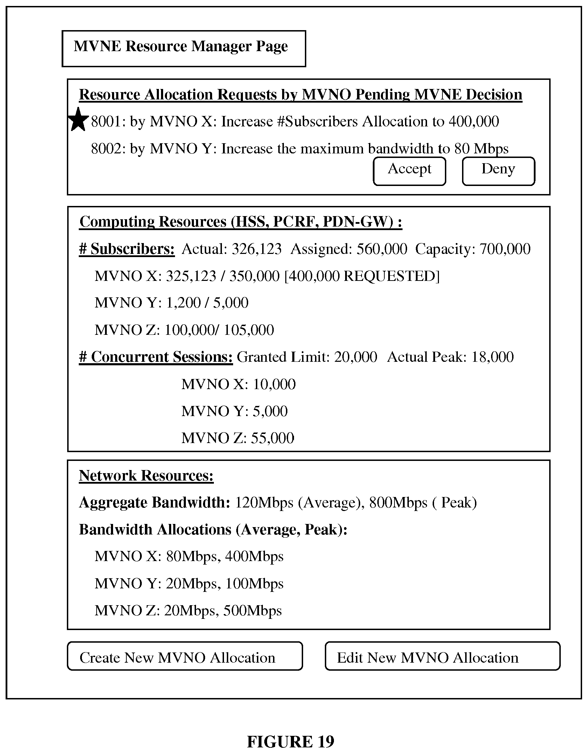

FIG. 19 illustrates an example graphical user interface of MVNE Resource Management for MVNE, in accordance with embodiments of the invention. In particular, FIG. 19 illustrates a graphical user interface of the MVNE Resource Manager Page, which is to be used by an operator of MVNE. The page enables the MVNE to check and act upon resource requests that are placed by MVNO partners. The Page may consist of multiple sections. A section on Resource Allocation Requests by MVNO Pending MVNE Decision lists resource allocation requests by MVNO partners, allowing the MVNE to select one of them and select wither to accept or deny the request. Currently a Request #8001 is selected (as indicated by the star icon), which indicates that MVNO X has requested to increase the number of subscribers allocation to 400,000. Request #8002 indicates that MVNO Y has requested to increase the maximum bandwidth to 80Mbps. The MVNE may accept or deny the request based on the overall resource availability of the MVNE by selectin either Accept or Deny button. The page also displays consumption status of both computing and network resources that are being maintained by the MVNE. A section on computing resources may indicate a level of resources that are allocated to and being used by respective MVNO partners. For example, the screen indicates that the system has the capacity of serving the total of 700,000 subscribers, 560,000 subscribers are allocated among MVNO partners, and the MVNOs use the actual total of 326,123 subscribers. The section may also list a number of allocated subscribers and active subscribers. MVNO X for example, has been allocated 350,000 subscribers, and 325,123 subscribers are active. Of 326,123 subscribers, 325,123 subscribers belong to MVNO X, and MVNO X has the allocated capacity of 350,000 subscribers. MVNO X has requested for 700,000 subscribers. MVNO Z currently has 100,000 subscribers, out of the total of 105,000 allocated subscribers. The #Current Sessions section indicates that the MVNE has granted 20,000 concurrent sessions among MVNO partners: MVNO X is allocated 10,000 concurrent sessions, MVNO Y 5,000 concurrent sessions, etc. The actual peak has been 18,000 concurrent communication sessions between Mobile Devices and Application Servers or the Internet. The Network Resources section lists resource allocations and usage status of network resources, such as bandwidth. The section shows that the aggregate bandwidth consumption is 120Mbps in average and 800Mbps at peak time. The section also indicates bandwidth allocations for respective MVNO partners. This page enables the MVNE to create and edit resource allocations for respective MVNO partners.

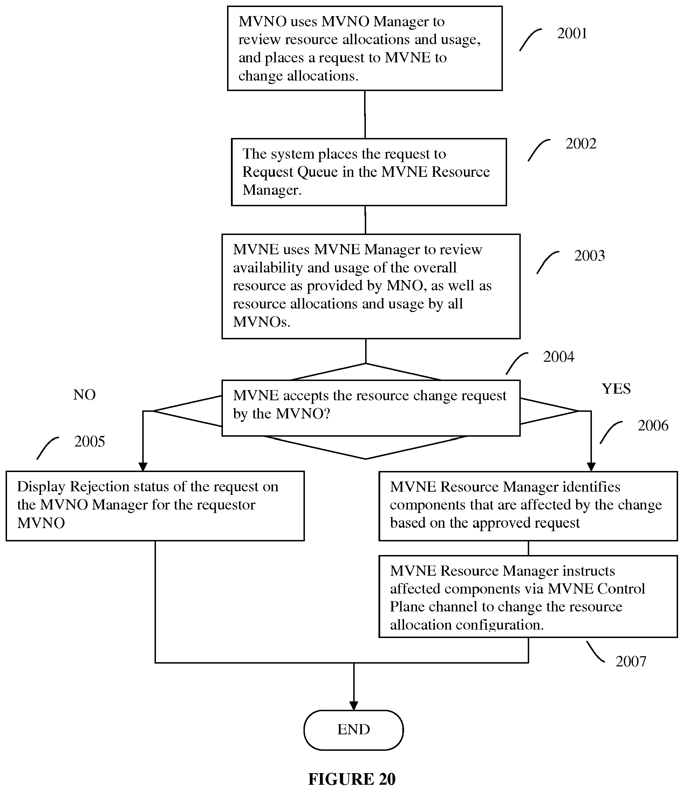

FIG. 20 illustrates an example process of resource allocation based on requests made by MVNOs, in accordance with embodiments of the invention. In particular, FIG. 20 illustrates an example process where an MVNE receives, reviews, and decides on resource allocation requests made by MVNOs. FIG. 20 may be used to illustrate a sequence that the MVNE system platform processes a resource allocation request placed by its MVNO partner, and reconfigure the system if needed to accommodate the change request. At block 2001, MVNO uses MVNO Manager 1209 to review resource allocations and usage, and places a request to MVNE to change resource allocation. At block 2002, in response to Operator of at MVNO placing a resource change request, the system places the request to Request Requests 1201a in the MVNE Resource Manager 1210. At block 2003, MVNE uses MVNE Resource Manager 1209 to review availability and usage of the overall resource as provided by MNO, as well as resource allocations and usage by all of its MVNO partners. At block 2004, a determination is made as to whether MVNE accepts the resource change request by the MVNO. If yes, at block 2006, the MVNE Resource Manager 1210 identifies components that are affected by the change based on the approved request. Additionally, at block 2007, MVNE Resource Manager 1209 instructs the affected components via MVNE Control channel to change the resource allocation configurations. If, however, the MVNE does not accept the resource change request by the MVNO, then a block 2005, the system displays a rejection status of the resource change request on the MVNO Manager for the requestor MVNO.

While not shown in diagrams, one embodiment includes a billing component that collects service usage data such as data volume, data transmission time duration, average bandwidth consumed during a predetermined time period, and generates billing records for MVNO partners on behalf of the respective MVNO partners. The component calculates invoice amounts based on formulae and unit pricing of services that respective MVNO partners specify. The computing and memory resources are isolated among the respective MVNO partners by instantiating separate virtual servers, in order to attain secure environment for the MVNO partners. The pricing, formulae, and other information that are pertinent to billing may be remotely set forth by each MVNO partner through respective MVNO Resource Management tool. The embodiment provides an environment where data management is securely isolated to contain MVNO-specific confidential information such as product and business logic data separately by the MVNE.

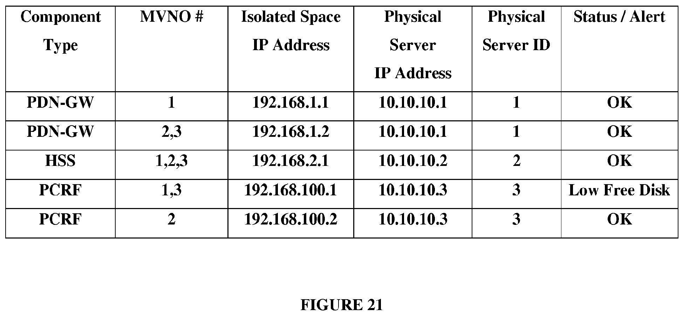

FIG. 21 illustrates an example data structure to manage allocation of mobile network core components to MVNOs by MVNE, in accordance with embodiments of the invention. In particular, FIG. 21 illustrates an example table that manages isolated spaces that are allocated within respective network components, as managed by an MVNE Resource Manager, such as MVNE Resource Manager 1210. The table contains attributes such as, but not limited to, Component Type such as PDN-GW, HSS, and PCRF, identifiers of MVNO Partners, IP addresses of the Isolated Spaces, IP addresses of physical servers, physical server identifiers, and Status/alert indicators. For example, a physical server with Physical Server Id =1 has a physical server IP address of 10.10.10.1, and hosts two instances of PDN-GW, one for MVNO Partner #1 at 192.168.1.1 and the other for MVNO Partners #2 and #3 at 192.168.1.2. The table also indicates that the data storage disk that is allocated for PCRF (for MVNOs 1 and 3) are low in free space. The system may allow allocating computing resources that are isolated for one or more of MVNO partners.

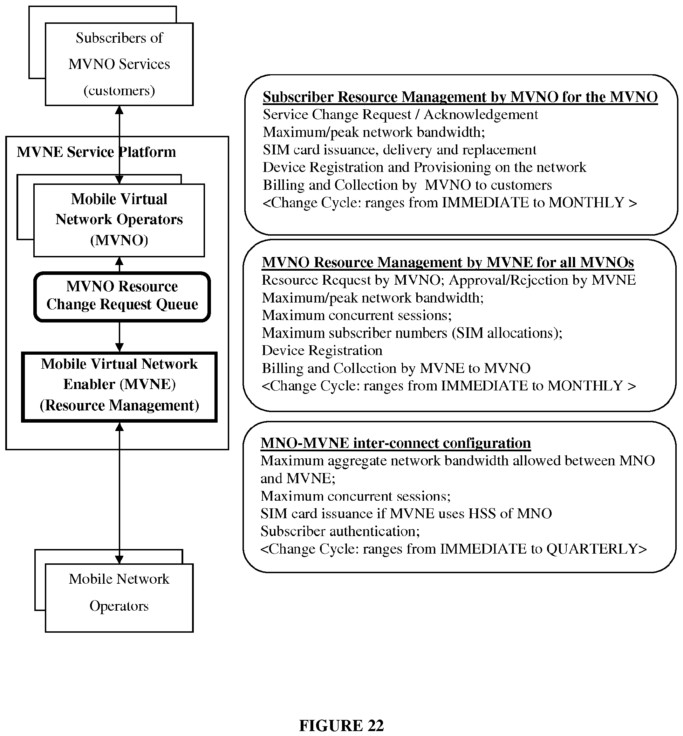

FIG. 22 illustrates an example schematic diagram showing resource allocation configurations for MNO-MVNE, MVNE, and MVNO, in accordance with embodiments of the invention. In particular, FIG. 22 illustrates a schematic diagram showing the MVNE system platform in relation to MVNOs and the systems by MNOs and end customers who use the MVNO services. The MVNE service platform may be useful for the following stakeholders of the overall ecosystem: MVNO subscribing customers, MVNOs, MVNE, and MNOs. For example, attributes that MVNO manage by using the MVNE service platform may include subscriber service change request and acknowledgement; maximum network bandwidth that MVNO allows on respective subscribing customers; and SIM card issuance and management. Additional attributes may include registration and provisioning mobile devices that are used by subscribing customers; billing and collection of service usages by subscribing customers.

In examples, response time required for such processing requests may range from immediate (real-time) to monthly. In some examples, a set of parameters that the MVNO uses to manage its allocated resources and configurations by using the MVNE service platform may include resource change requests that are made by the MVNO, and approval/rejections made by the MVNE on the requests; maximum network bandwidth as allocated to the MVNO by the MVNE; maximum concurrent sessions as allowed to the MVNO by the MVNE; maximum subscriber numbers (i.e. SIM allocations) as allocated to the MVNO by the MVNE; and/or billing and collection for the MVNO by the MVNE. Response time required for the interaction between MVNE and MVNOs may ranges from immediate to monthly.

In some examples, the MVNE service platform may manage MNO-MVNE inter-connect configurations. Parameters that are associated with the MNO-MVNE interconnect may include the maximum aggregate network bandwidth for communication between MNO and MVNE, maximum concurrent sessions (e.g. PDP Contexts), SIM card issuance if the MVNE uses HLR/HSS of the MNO, and conditions of subscriber authentications. Typically, response time required to change such parameters may range from immediate to quarterly.

Typically, time required to change resource allocations such as the maximum network bandwidth between MVNE and MNO may take longer than what MVNO expects to reallocate resources for the MVNO service. MVNOs, who do not own capital assets for networking, may require rapid changes in scalability to match with business demands. Reconfiguring the interconnect between MVNE and MNO may sometimes takes longer than several months, as it involves constructions of physical core network capital equipment and access to the physical radio networks that are operated by the MNO. The use of the MVNE service platform may enable an MVNE to manage the resource allocations to strike the balance between meeting the shorter cycles of demands from MVNOs and meeting the longer cycles of capital resource changes on the MVNE-MNO interconnect.

The methods described herein may be implemented in mobile devices such as mobile phones, mobile tablets and other mobile devices with various communication capabilities including wireless communications, which may include radio frequency transmission infrared transmission or other communication technology. Thus, the hardware described herein may include transmitters and receivers for radio and/or other communication technology and/or interfaces to couple to and communication with communication networks.

The methods described herein may be implemented in computer software that may be stored in the computer systems including a plurality of computer systems and servers. These may be coupled over computer networks including the internet. Accordingly, an embodiment may include a network including the various systems and devices coupled with the network. Further, various methods and architectures as described herein, such as the various processes described herein or other processes or architectures, may be implemented in resources including computer software such as computer executable code embodied in a computer readable medium, or in electrical circuitry, or in combinations of computer software and electronic circuitry.

Aspects of the systems and methods described herein may be implemented as functionality programmed into any of a variety of circuitry, including programmable logic devices (PLDs), such as field programmable gate arrays (FPGAs), programmable array logic (PAL) devices, electrically programmable logic and memory devices and standard cell-based devices, as well as application specific integrated circuits (ASICs). Some other possibilities for implementing aspects of the systems and methods include: microcontrollers with memory, embedded microprocessors, firmware, software, etc. Furthermore, aspects of the systems and methods may be embodied in microprocessors having software-based circuit emulation, discrete logic (sequential and combinatorial), custom devices, fuzzy (neural network) logic, quantum devices, and hybrids of any of the above device types. Of course the underlying device technologies may be provided in a variety of component types, e.g., metal-oxide semiconductor field-effect transistor (MOSFET) technologies like complementary metal-oxide semiconductor (CMOS), bipolar technologies like emitter-coupled logic (ECL), polymer technologies (e.g., silicon-conjugated polymer and metal-conjugated polymer-metal structures), mixed analog and digital, etc.

It should be noted that the various functions or processes disclosed herein may be described as data and/or instructions embodied in various computer-readable media, in terms of their behavioral, register transfer, logic component, transistor, layout geometries, and/or other characteristics. Computer-readable media in which such formatted data and/or instructions may be embodied include, but are not limited to, non-volatile storage media in various forms (e.g., optical, magnetic or semiconductor storage media) and carrier waves that may be used to transfer such formatted data and/or instructions through wireless, optical, or wired signaling media or any combination thereof. Examples of transfers of such formatted data and/or instructions by carrier waves include, but are not limited to, transfers (uploads, downloads, email, etc.) over the Internet and/or other computer networks via one or more data transfer protocols (e.g., HTTP, FTP, SMTP, etc.). When received within a computer system via one or more computer-readable media, such data and/or instruction-based expressions of components and/or processes under the systems and methods may be processed by a processing entity (e.g., one or more processors) within the computer system in conjunction with execution of one or more other computer programs.

Unless specifically stated otherwise, as apparent from the following discussions, it is appreciated that throughout the specification, discussions utilizing terms such as "processing," "computing," "calculating," "determining," or the like, may refer in whole or in part to the action and/or processes of a processor, computer or computing system, or similar electronic computing device, that manipulate and/or transform data represented as physical, such as electronic, quantities within the system's registers and/or memories into other data similarly represented as physical quantities within the system's memories, registers or other such information storage, transmission or display devices. It will also be appreciated by persons skilled in the art that the term "users" referred to herein may be individuals as well as corporations and other legal entities. Furthermore, the processes presented herein are not inherently related to any particular computer, processing device, article or other apparatus. An example of a structure for a variety of these systems will appear from the description herein. In addition, embodiments of the invention are not described with reference to any particular processor, programming language, machine code, etc. It will be appreciated that a variety of programming languages, machine codes, etc. may be used to implement the teachings of the invention as described herein.

Unless the context clearly requires otherwise, throughout the description and the claims, the words 'comprise,' 'comprising,' and the like are to be construed in an inclusive sense as opposed to an exclusive or exhaustive sense; that is to say, in a sense of 'including, but not limited to.' Words using the singular or plural number also include the plural or singular number respectively. Additionally, the words 'herein,' 'hereunder,' 'above,' 'below,' and words of similar import refer to this application as a whole and not to any particular portions of this application. When the word 'or' is used in reference to a list of two or more items, that word covers all of the following interpretations of the word: any one or more of the items in the list, all of the items in the list and any combination of the items in the list.

The various features described above may be combined in various combinations. Without limitation, features described may be combined with various systems, methods and products described. Without limitation, multiple dependent claims may be made based on the description herein. While preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

While preferred embodiments of the invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention.

### CLAUSES

1. A computer-implemented method for controlling a secure network connection, comprising:
   receiving, by a connection server, a request from a terminal device to establish a session with a remote application server for a secure network communication;
   selecting, by the connection server, at least one routing table from a set of multiple routing tables, the at least one routing table specific to the session requested to route data traffic to establish a secure data communication;
   activating, by the connection server, at least one proxy connection server by allocating computing resources that are dedicated to the session, wherein the proxy connection server manages the session in an isolated manner from other sessions; and
   connecting, by the connection server, a first secure connection that is between the terminal device and the activated proxy connection server based on the selected routing table;
   connecting, by the connection server, a second secure connection between the activated proxy connection server and a remote application server based on the selected routing table; and
   routing, by the connection server, data traffic for the session using the selected routing table through the activated proxy connection server.
2. The method of clause 1, wherein the proxy connection server is an instance of the connection server, wherein the proxy connection server is exclusive to the secure network communication.
3. The method of clause 1, wherein the proxy connection server is an instance of the connection server, wherein the proxy connection server is exclusive to an application on the terminal device.
4. The method of clause 1, wherein the proxy connection server is an instance of the connection server, wherein the proxy connection server is exclusive to the terminal device.
5. The method of clause 1, wherein the proxy connection server is an instance of the connection server, wherein the proxy connection server is exclusive to the remote application server.
6. The method of any preceding clause, further comprising:
   distributing, by the connection server, the at least one routing table from a set of multiple routing tables to at least one network router switch device on the network; and
   remotely installing, by the connection server, the at least one routing table on the network router switch device.
7. The method of any preceding clause, wherein the proxy connection server comprises at least one session manager.
8. The method of any preceding clause, wherein the proxy connection server comprises at least one capacity manager.
9. The method of any preceding clause, wherein a first port within the proxy connection server that connects to the terminal device is assigned an address that is uniquely identifiable.
10. The method of clause 9, wherein a second port within the proxy connection server that connects to the remote application server is assigned an address that is uniquely identifiable.
11. The method of clause 10, wherein the address of the first port is distinct from the address of the second port.
12. The method of any preceding clause, wherein the data traffic for the session is processed with resources that are isolated from those used for other communication sessions.
13. The method of any preceding clause, wherein the data traffic for the session is processed along data transmission paths that are isolated from those used for other communication sessions.
14. The method of any preceding clause, further comprising:
   authenticating the terminal device.
15. A computer-implemented method for controlling a secure network connection, comprising:
   receiving, by a connection server, a request from a terminal device to establish a session with a remote application server for a secure network communication;
   dynamically providing, by the connection server, at least one routing table to at least one network router switch device on the network, wherein the at least one routing table is dynamically provided in response to the connection server receiving the request from the terminal device to establish a session with a remote application server for a secure network communication;
   selecting, by the connection server, the at least one routing table to establish a secure data communication;
   activating, by the connection server, at least one proxy connection server by allocating computing resources that are dedicated to the session, wherein the proxy connection server manages the session in an isolated manner from other sessions; and
   connecting, by the connection server, a first secure connection that is between the terminal device and the activated proxy connection server based on the selected routing table;
   connecting, by the connection server, a second secure connection between the activated proxy connection server and a remote application server based on the selected routing table; and
   routing, by the connection server, data traffic for the session using the selected routing table through the activated proxy connection server.
16. The method of clause 15, wherein the at least one routing table is exclusive to the secure network communication.
17. The method of clause 15, wherein the at least one routing table is exclusive to an application on the terminal device.
18. The method of clause 15, wherein the at least one routing table is exclusive to the terminal device.
19. The method of clause 15, wherein the at least one routing table is exclusive to the remote application server.
20. The method of any of clause 15 to 19, wherein at least one routing table is specific to the session requested to route data traffic to establish a secure data communication.
21. A computer-implemented method for controlling a secure network connection, comprising:
   receiving, by a connection server, a request from a terminal device to disconnect a session of a secure network communication between the terminal device and a remote application server;
   disconnecting, by the connection server, a first secure connection that is between the terminal device and an activated proxy connection server based on a routing table;
   disconnecting, by the connection server, a second secure connection between the activated proxy connection server and a remote application server based on a routing table; a
   dynamically de-allocating, by the connection server, the routing table in response to the request to disconnect the session; and
   dynamically de-allocating, by the connection server, the proxy connection server in response to the request to disconnect the session.
22. The method of clause 21, wherein the at least one routing table is exclusive to the secure network communication.
23. The method of clause 21, wherein the at least one routing table is exclusive to an application on the terminal device.
24. The method of clause 21, wherein the at least one routing table is exclusive to the terminal device.
25. The method of clause 21, wherein the at least one routing table is exclusive to the remote application server.
26. The method of any of clause 21 to 25, wherein at least one routing table is specific to the session requested to route data traffic to establish a secure data communication.
27. A computer-implemented method for a mobile virtual network enabler (MVNE), comprising:
   receiving, by a mobile virtual network operator (MVNO) resource manager, a resource allocation change request by MVNO;
   inserting, by the MVNO resource manager, the resource allocation change request in a request queue for the MVNE;
   receiving, by a MVNE resource manager, an instruction to reallocate computing resources as requested by the MVNO upon the MVNE reviewing the resource allocation change request in the request queue; and
   instructing network components to reconfigure resource allocations for the MVNO within an isolated computing space that is specific to the MVNO via an MVNE control channel.
28. A computer-implemented method for an MVNE service platform, comprising:
   receiving, by an MVNE resource manager, a request from an MVNO to allocate resources to establish connection;
   displaying, by the MVNE resource manager, MVNO resource allocation requests and usage status of MVNE resources in the request queue for the MVNE;
   instructing, by the MVNE resource manager, MVNE service components to allocate and activate respective proxy components for the MVNO to process data communication for the MVNO, wherein the computing spaces are isolated from the computing spaces used for other MVNOs;
   creating, by the MVNE resource manager, a control channel for the MVNO, wherein the control channel for the MVNO connects proxy components in the MVNE service platform for the MVNO; and
   creating, by the MVNE resource manager, a data communication route for the MVNO between a mobile device and application servers.

## Claims

1. A computer-implemented method for controlling a secure network connection, comprising:
receiving, by a connection server, a request from a terminal device to establish a session with a remote application server for a secure network communication;
selecting, by the connection server, at least one routing table from a set of multiple routing tables, the at least one routing table specific to the session requested to route data traffic to establish a secure data communication;
activating, by the connection server, at least one proxy connection server by allocating computing resources that are dedicated to the session, wherein the proxy connection server manages the session in an isolated manner from other sessions; and
connecting, by the connection server, a first secure connection that is between the terminal device and the activated proxy connection server based on the selected routing table;
connecting, by the connection server, a second secure connection between the activated proxy connection server and a remote application server based on the selected routing table; and
routing, by the connection server, data traffic for the session using the selected routing table through the activated proxy connection server.

2. The method of claim 1, wherein the proxy connection server is an instance of the connection server, wherein the proxy connection server is exclusive to the secure network communication.

3. The method of claim 1, wherein the proxy connection server is an instance of the connection server, wherein the proxy connection server is exclusive to an application on the terminal device.

4. The method of claim 1, wherein the proxy connection server is an instance of the connection server, wherein the proxy connection server is exclusive to the terminal device.

5. The method of claim 1, wherein the proxy connection server is an instance of the connection server, wherein the proxy connection server is exclusive to the remote application server.

6. The method of any preceding claim, further comprising:
distributing, by the connection server, the at least one routing table from a set of multiple routing tables to at least one network router switch device on the network; and
remotely installing, by the connection server, the at least one routing table on the network router switch device.

7. The method of any preceding claim, wherein the proxy connection server comprises at least one session manager.

8. The method of any preceding claim, wherein the proxy connection server comprises at least one capacity manager.

9. The method of any preceding claim, wherein a first port within the proxy connection server that connects to the terminal device is assigned an address that is uniquely identifiable.

10. The method of claim 9, wherein a second port within the proxy connection server that connects to the remote application server is assigned an address that is uniquely identifiable.

11. The method of claim 10, wherein the address of the first port is distinct from the address of the second port.

12. The method of any preceding claim, wherein the data traffic for the session is processed with resources that are isolated from those used for other communication sessions.

13. The method of any preceding claim, wherein the data traffic for the session is processed along data transmission paths that are isolated from those used for other communication sessions.

14. The method of any preceding claim, further comprising:
authenticating the terminal device.

15. A computer-implemented method for controlling a secure network connection, comprising:
receiving, by a connection server, a request from a terminal device to establish a session with a remote application server for a secure network communication;
dynamically providing, by the connection server, at least one routing table to at least one network router switch device on the network, wherein the at least one routing table is dynamically provided in response to the connection server receiving the request from the terminal device to establish a session with a remote application server for a secure network communication;
selecting, by the connection server, the at least one routing table to establish a secure data communication;
activating, by the connection server, at least one proxy connection server by allocating computing resources that are dedicated to the session, wherein the proxy connection server manages the session in an isolated manner from other sessions; and
connecting, by the connection server, a first secure connection that is between the terminal device and the activated proxy connection server based on the selected routing table;
connecting, by the connection server, a second secure connection between the activated proxy connection server and a remote application server based on the selected routing table; and
routing, by the connection server, data traffic for the session using the selected routing table through the activated proxy connection server.
